# EUROPEAN PATENT APPLICATION

(11) **EP 1 405 609 A1**
(43) Date of publication of application: **07.04.2004**
(21) Application number: 03017158.1
(22) Date of filing: 29.07.2003
(51) Int. Cl.: A61C 5/02

(54) **Root canal reamer for handpieces**

(30) Priority: 04.10.2002 IT PD20020254
(71) Applicant: Sweden & Martina S.p.a., 35020 Due Carrare (PD) (IT)
(72) Inventor: Malagnino, Vito Antonio, 00161 Roma (IT)
(74) Representative: Gustorf, Gerhard, Dipl.-Ing.

(57) **Abstract**

The invention is a new, two- or three-fluted root canal reamer for handpieces, with a limited number of turns (between 2 and 7), increasingly tapered in the apical-coronal direction and with the pitch of the instrument progressively increasing from the root tip towards the crown. The angle of the spiral remains substantially constant or varies by no more than ± 25%. The depth of the groove increases as the diameter of the instrument increases. The new instrument can be used in combination with others.

## Description

This patent concerns the dental instruments sector and particularly the root canal reamers commonly applied to micromotors and handpieces for root canal treatment purposes.

The root canal reamers in current use basically comprise:
- two or three sharp flutes (cutting edges);
- a blunted tip, that reduces the self-tapping tendency of the tip, but has the disadvantage of opposing a greater resistance to twisting;
- scarcely accentuated cutting angles (spiral) to reduce the instrument's self-tapping tendency and risk of jamming.

Known root canal reamers with two flutes cut more efficiently and consequently tend to screw themselves into the dentine, whereas reamers with three flutes cut less effectively and consequently do not have this drawback.

This self-tapping phenomenon is also related to the instrument's pitch: the tighter the pitch, the lower the instrument's tendency to screw into the tooth.

The cutting action obtained with a two-fluted instrument is more aggressive and less smooth, because there are fewer cutting edges (distributed over the root canal surface) than in the three-fluted instrument. This is commonly considered a drawback, because the self-tapping tendency carries a risk of the instrument advancing too rapidly and becoming jammed in the root canal. This phenomenon is more frequent with the larger-sized instruments.

The self-tapping tendency can be contrasted by designing a root canal reamer with flutes featuring a radial cutting edge.

The self-tapping tendency is easier to control in the smaller root canal reamers and can even become an advantage because it avoids the need to exert a pressure on the instrument.

To make a root canal reamer achieve a cutting action, a certain amount of manual pressure must be exerted on the instrument, but this varies from one individual to another and this can lead to errors (excessive or insufficient pressure). If the pressure exerted is insufficient, the instrument's potential is not fully exploited; if the pressure is excessive, there is a risk of twisting stresses coming to bear on the instrument and causing it to break.

Nickel-titanium instruments come in different tip diameters and different tapers. The availability of different sizes enables them to be used in various sequences. Almost all the known sequences use the instruments to achieve an early enlargement of the more coronal portion of the canal in order to subsequently proceed with the preparation in the apical direction; this strategy goes by the name of crown-down root canal preparation. To perform this type of preparation, larger-sized instruments (especially in terms of the taper) are used first, followed by progressively smaller instruments. This sequence is not very useful, however, if the shape of the root canal has a curvature just below the crown or midway along the canal, because the larger-sized instruments (which ought to be used first) are too rigid to cope with any early curvature and may even break.

In these circumstances, it becomes necessary to alternate between small and large instruments in an attempt to flatten the curve a little, using a filing action. Such a movement has little effect when nickel-titanium instruments are used, however, because they are too flexible and not sharp enough to rectify a curve effectively. Moreover, if they continue to turn for too long inside a curved canal, they accumulate cyclic fatigue and the instrument is likely to break.

Using large nickel-titanium instruments to work this side of the curve and then small instruments to work beyond the curve also entails accentuating the discontinuity between the two portions of canal, which subsequently become difficult to connect to achieve a proper canal preparation.

It would therefore clearly be an advantage to have an instrument capable of always arriving at the tip of the root to ensure a continuity throughout the canal, but that is also capable of performing a lateral cutting action at various levels in the canal to enable the curves to be smoothed out and the more coronal portions of the canal to be enlarged, even more than the rest of the canal's diameters, to facilitate a more apical penetration both of said instrument and of the subsequent instruments.

The aim of the present invention is to have a root canal reamer that slides easily towards the root's tip and that can be held in place for a few seconds to enlarge any curves by means of a filing effect deriving from a lateral cutting action before the uppermost, larger and less flexible portion of the instrument is engaged in the canal.

The object of the present invention is a new, particularly flexible, two- or three-fluted root canal reamer with a taper and pitch that gradually increase in the distal direction and a kit comprising a combination of these root canal reamers for use in a suitable original order.

This root canal reamer, which may have an apical tip of any suitable diameter, will comprise a conical section, so that the diameter increases progressively further from the tip, with a taper ranging from 3% to 8% and a length of 5-25 mm up until it reaches the maximum diameter, while the instrument's pitch increases gradually towards the coronal end, i.e. with a pitch increasing in the distal direction, thereby helping to reduce the tendency for it to become jammed, or for debris to be discharged and accumulate in the canal. In addition, the instrument has a characteristically much more ample pitch than the known instruments, so a two-fluted instrument will have from 3 to 7 turns, while a three-fluted instrument will have from 2 to 5 turns.

Moreover, a cross-sectional view of the root canal reamers described in this patent shows that they are characterized in that they have wider discharge grooves while the area of contact at the radial tip is reduced to a minimum in order to retain a minimum core thickness sufficient to avoid jeopardizing the instrument's strength.

In particular, the depth of the groove increases with the increasing diameter of the instrument, offering the advantage of greater flexibility and a greater discharging capacity.

The implicit effect of this greater discharging capacity is an associated greater flexibility of the reamer. The edge of the flutes is sharpened and contributes towards improving the cutting capacity and facilitating the progress of the instrument.

The advantages achieved are considerable, since the root canal reamer is aggressive and effective, it advances alone without the need to exert any manual pressure, i.e. it tends to be self-tapping.

This factor, which was conventionally seen as a drawback for the safety of the root canal reamer, is balanced by a marked discharging capacity and a minimal radial interference that reduces friction.

It also enables the root canal reamer to operate in a manner that is both more cautious at the root tip (which is generally where the greatest risk lies due to the chances of the instrument breaking) and, at the same time, more aggressive and efficient in relation to the coronal third of the tooth.

The self-tapping tendency typical of the small instruments therefore becomes an advantage, contrary to theories and knowledge hitherto reached by the state of the art.

Thus, the maximum cutting capacity is sought by working on the parameters relating to the blade's angle of impact, the discharge grooves, the angle of the spiral and the use of two or three flutes, depending on the functions and dimensions of the instrument.

The new kit comprises four root canal reamers for use in the following order:
- the first root canal reamer to use (after reaching the root tip with a manual steel file No. 10) is an instrument with a diameter at the tip of 10 and a taper of 0.04 (or 4%);
- the second root canal reamer has a diameter at the tip of 15 and a taper of 0.05 (or 5%);
- the third root canal reamer has a diameter at the tip of 20 and a taper of 0.06 (or 6%).

This part of the preparation constitutes an initial sequence for gradually enlarging the entire canal using a crown-down approach.

In truth, using very sharp and very flexible instruments, the previously-described dual enlargement action can be performed, which will enable for each instrument an initial progression followed, where necessary, by a slight withdrawal (1 mm) for a few seconds to enable a lateral filing action, then a further progression.

All this is done using highly-flexible, two-fluted instruments.

This part of the preparation is suitable for all types of root canal and enables a canal to be prepared using just three instruments.

The final canal preparation is done using larger-gauge instruments with 3 flutes.

With the known instruments, it is impossible to complete the above-described operations successfully.

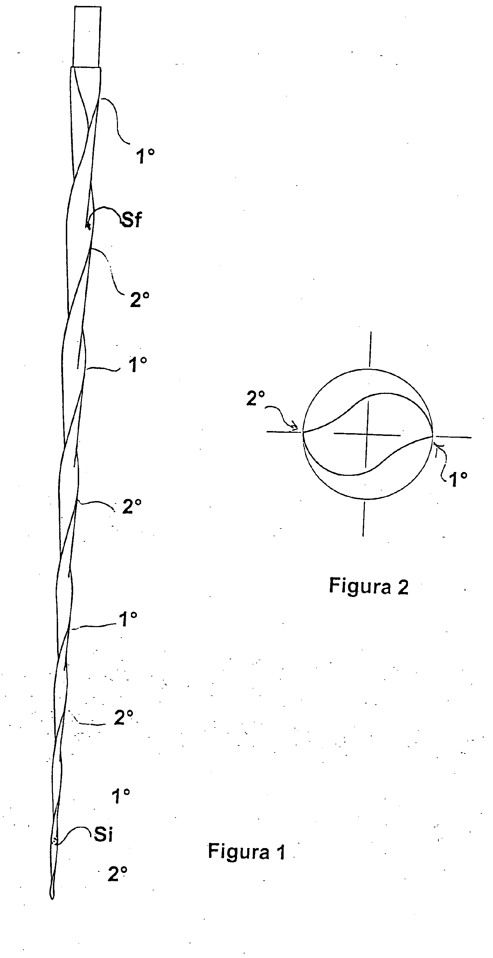

The attached drawing is an illustrative and not restrictive example of a tapered instrument with two flutes, (1°) and (2°), with increasing pitch, where the depth of the groove in the apical region (Si) is smaller than in the coronal region (Sf). The number of turns is limited to 3-4.

Thus, with reference to the above description and attached drawing, the following claims are put forth.

## Claims

1. Root canal reamer for handpieces, with two or three flutes, **characterized in that** it has from 2 to 7 turns.

2. Root canal reamer for handpieces according to claim 1, **characterized in that** it is conical in the apical-coronal direction with the instrument's pitch increasing progressively from the root tip towards the crown.

3. Root canal reamer for handpieces according to claims 1 and 2, **characterized in that** the gradient, or angle, of the spiral is substantially constant.

4. Root canal reamer for handpieces according to claims 1 and 2, **characterized in that** said gradient, or angle, of the spiral varies by no more than ± 25%.

5. Root canal reamer for handpieces according to claims 1, 2, 3 and 4, **characterized in that** the depth of the groove increases as the diameter of the instrument increases.

6. Dentistry kit, **characterized in that** it comprises the following root canal reamers:
■ a two-fluted root canal reamer according to claims 1, 2, 3, 4, 5, with a diameter at the tip of 10 and a taper of 4%;
■ a two-fluted root canal reamer according to claims 1, 2, 3, 4, 5, with a diameter at the tip of 15 and a taper of 5%;
■ a two-fluted root canal reamer according to claims 1, 2, 3, 4, 5, with a diameter at the tip of 20 and a taper of 6%;
■ a two-fluted root canal reamer according to claims 1, 2, 3, 4, 5 with a diameter at the tip of 25 and a taper of 6 or 7%.
